(19) Europäisches Patentamt
European Patent Office
Office européen des brevets

(11) **EP 4 216 108 A1**

(12) **EUROPEAN PATENT APPLICATION**

(43) Date of publication:
**26.07.2023 Bulletin 2023/30**

(21) Application number: **22205212.8**

(22) Date of filing: **03.11.2022**

(51) International Patent Classification (IPC):
***G06N 5/01*** *(2023.01)*

(52) Cooperative Patent Classification (CPC):
**G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.01.2022 JP 2022009452**

(71) Applicant: **FUJITSU LIMITED**
**Kawasaki-shi, Kanagawa 211-8588 (JP)**

(72) Inventor: **KANDA, Kouichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, AND INFORMATION PROCESSING PROGRAM**

(57) An information processing apparatus of obtaining a solution to a problem in which constraint that includes two-way one-hot constraint is given, by using an objective function that has a number of variables, the information processing apparatus including: a candidate determination unit that excludes, when determining sets of candidates that have values which are to be changed based on the constraint from expanded variables obtained by adding a plurality of redundant variables to the number of variables, one of the sets of the candidates in which values of the redundant variables are exchanged with each other; a search unit that changes the values of the sets of the candidates determined by the candidate determination unit, according to the constraint, and performs a search based on the objective function; and an update control unit that determines the solution on the basis of a result of the search by the search unit.

FIG. 2

EP 4 216 108 A1

**Description**

FIELD

The embodiment discussed herein is related to an information processing apparatus, an information processing method, and an information processing program.

BACKGROUND

Combination optimization problems exist in various fields in today's society. For example, in fields of manufacturing/distribution, marketing and the like, a combination of elements that optimizes or minimizes a cost is searched for. However, the combination optimization problem is known as a problem that is difficult to solve with a conventional Von Neumann computer because calculation time increases exponentially as the number of variables corresponding to the above-described elements increases.

As a method for solving a multivariable optimization problem that a von Neumann computer is not good at, there is an optimization apparatus using an Ising type energy function. Such optimization apparatus is also referred to as Ising machine, Boltzmann machine or the like. Furthermore, the energy function might also be referred to as a cost function or an objective function. The optimization apparatus performs calculation by replacing a problem to be calculated with an Ising model, which is a model representing behavior of spins of a magnetic material.

As a calculation method for a minimum value obtaining problem using an Ising model, there is a method for obtaining a minimum value of the Ising type energy function by using Markov Chain Monte Carlo (MCMC). In the MCMC method, it is common to perform state transition, which is update of a state variable of the energy function with a transition probability according to Boltzmann distribution. In the MCMC method, a search is performed by probabilistically inverting any bit of a bit string representing a state, and it is determined whether it is possible to transfer on the basis of an energy difference in a case of transfer from a current state to a neighboring state. Ising type energy is energy of a quadratic system of binary variables.

Among such optimization problems, there is a problem to which a constraint condition referred to as one-hot constraint is imposed. The one-hot constraint is constraint in which the number of state variables a value of which is 1 in one solution is limited to one in a case where there is a plurality of state variables. The optimization problems in which the one-hot constraint appears include many scheduling problems such as a traveling salesman problem (TSP) and a versatile place and route (VPR) problem as well as a knapsack problem and a bin packing problem.

Moreover, there are two types of one-hot constraint. One is the constraint referred to as one-way one-hot (1W1H) constraint. In this case, each variable appears once in a set in constraint expression. The optimization problems with this constraint include a traffic optimization problem and a bin packing problem.

The other is the constraint referred to as two-way one-hot (2W1H) constraint. In this case, when $n^2$ variables are arranged in n x n square, the sum of each row and the sum of each column are all 1. This constraint is equivalent to the constraint in a case of determining order of n different elements such as integers 1, 2, ..., n, for example. The optimization problems with this constraint include a traveling salesman problem, a versatile place and route problem, and a quadratic assignment problem (QAP).

As a solution to such two-way one-hot problem, for example, in a case of the versatile place and route problem, suggested is a technology of solving the versatile place and route problem by determining a maximum value of depots included in each route in consideration of an upper limit of the number of depots to which one vehicle may go from a loading amount upper limit. In addition, suggested is a technology of solving the versatile place and route problem by automatically adjusting a value of a weight coefficient with respect to a constraint term representing the constraint condition using an update rule. Furthermore, suggested is a technology of solving the versatile place and route problem by searching for an optimal travel route by using an insertion method for selecting a customer referred to as a main customer from each of a plurality of customer groups and inserting remaining customers to a closed route connecting the main customers on the basis of an evaluation value.

Japanese Laid-open Patent Publication No. 08-153085 and Japanese Laid-open Patent Publication No. 2015-38429 are disclosed as related art.

SUMMARY

TECHNICAL PROBLEM

However, in the typical method for solving the versatile place and route problem by determining the maximum value of depots in each route considering the upper limit of the number of depots to which one vehicle may go from the loading amount upper limit, the problem is solved while arranging redundant depots corresponding to the largest value.

The number of redundant depots increases with a problem size, which might increase an optimization calculation time and make it difficult to reach an optimal solution.

Furthermore, in the technology of solving the versatile place and route problem by automatically adjusting the value of the weight coefficient regarding the constraint term representing the constraint condition using the update rule, it is difficult to improve calculation efficiency as compared with a case of solving the versatile place and route problem by using the redundant depots. Furthermore, even with the technology of solving the versatile place and route problem by searching for an optimum travel route by using the insertion method, it is difficult to improve the calculation efficiency as compared with the case of solving the versatile place and route problem by using the redundant depots. Therefore, in a case of solving the versatile place and route problem with any of the technologies, the calculation efficiency is not improved and it is difficult to improve a speed of solving the versatile place and route problem.

The disclosed technology is achieved in view of the above, and an object thereof is to provide an information processing apparatus, an information processing method, and an information processing program that shorten calculation time of a problem according to two-way one-hot constraint.

SOLUTION TO PROBLEM

According to an aspect of the embodiments, there is provided an information processing apparatus of obtaining a solution to a problem in which predetermined constraint that includes two-way one-hot constraint is given, by using an objective function that has a predetermined number of variables, the information processing apparatus including: a candidate determination unit that excludes, when determining sets of candidates that have values which are to be changed on the basis of the predetermined constraint from expanded variables obtained by adding a plurality of redundant variables to the predetermined number of variables, one of the sets of the candidates in which values of the redundant variables are exchanged with each other; a search unit that changes the values of the sets of the candidates determined by the candidate determination unit, according to the predetermined constraint, and performs a search on the basis of the objective function; and an update control unit that determines the solution on the basis of a result of the search by the search unit.

ADVANTAGEOUS EFFECTS OF INVENTION

In one aspect, this embodiment may shorten calculation time of a problem according to two-way one-hot constraint.

BRIEF DESCRIPTION OF DRAWINGS

FIG. 1 is a diagram for explaining two-way one-hot constraint;
FIG. 2 is a configuration diagram of an optimization unit included in an optimization apparatus according to an embodiment;
FIG. 3 is a diagram illustrating an example of a selection circuit;
FIG. 4 is a block diagram illustrating a control unit of the optimization apparatus in detail;
FIG. 5 is a diagram illustrating an example of a capacitated vehicle routing problem;
FIG. 6 is a diagram illustrating an example of a group variable given to an element of a matrix;
FIG. 7 is a flowchart of optimization processing by the optimization apparatus according to the embodiment; and
FIG. 8 is a diagram illustrating a degree of reduction in the number of iterations in a case of solving the capacitated vehicle routing problem.

DESCRIPTION OF EMBODIMENTS

Hereinafter, an embodiment of an information processing apparatus, an information processing method, and an information processing program disclosed in the present application is described in detail with reference to the drawings. Note that the following embodiment does not limit the information processing apparatus, the information processing method, and the information processing program disclosed in the present application.

[Embodiment]

A case where values of N bits corresponding to a plurality of spins (number of spins = N) included in a two-way one-hot Ising model are represented by state variables $x_1$ to $x_N$ is considered. Hereinafter, a state variable represented

by $x_i$ might be represented by a state variable $x_i$ or simply $x_i$.

In this case, one-hot constraint is satisfied when there is only one state variable a value of which is 1 in each group between braces of following expression (1), for example.

[Expression 1]

$$x = \left(\{x_1, \cdots, x_{s_1}\}, \{x_{s_1+1}, \cdots, x_{s_2}\}, \cdots\cdots, \{x_{s_{G-1}+1}, \cdots, x_N\}\right) \quad \cdots (1)$$

For example, in a case where there are three state variables $x_1$, $x_2$, and $x_3$ in a certain group, a state of $\{x_1, x_2, x_3\}$ = $\{1, 0, 0\}$, $\{0, 1, 0\}$, or $\{0, 0, 1\}$ satisfies the one-hot constraint. In contrast, a state of $\{x_1, x_2, x_3\}$ = $\{0, 0, 0\}$, $\{1, 1, 0\}$, $\{1, 0, 1\}$, $\{0, 1, 1\}$, or $\{1, 1, 1\}$ does not satisfy the one-hot constraint.

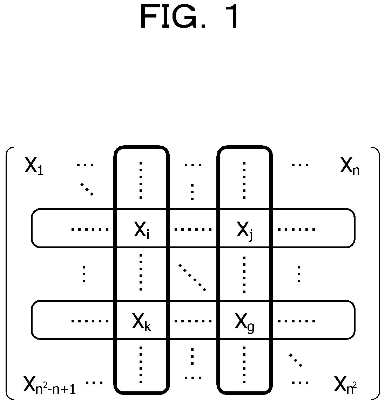

Moreover, in a case of two-way one-hot constraint, the one-hot constraint is satisfied in each of two groups of conditions, for example, there is one state variable the value of which is 1 in each group. In the two-way one-hot constraint, for example, in a case where each of two groups of conditions includes n components, elements each of which collectively represents the components of each group may be arranged into n x n square as illustrated in FIG. 1. In this case, the sum of each row and the sum of each column are all 1. FIG. 1 is a diagram for explaining the two-way one-hot constraint. In FIG. 1, m = 1, 2, ..., N, and N = $n^2$.

In this case, in order to make transition from a certain state satisfying the two-way one-hot constraint to another state satisfying the two-way one-hot constraint, an optimization apparatus changes values of four bits in one state update processing. For example, in a case where a state variable $x_j$ has a value of 0 in FIG. 1, when transition of $x_j$ is made from 0 to 1, transition of a state variable $x_i$ in the same row as that of $x_j$ having a value of 1 is made from 1 to 0. Furthermore, transition of a state variable $x_g$ in the same column as that of $x_j$ having a value of 1 is made from 1 to 0. Moreover, transition of $x_k$ in the same column as that of $x_i$ and in the same row as that of $x_g$ is made from 0 to 1. Hereinafter, the transition of the value of a certain state variable from 0 to 1 or from 1 to 0 is referred to as inversion of the value of the state variable or bit inversion.

In this manner, in order to make transition from the certain state satisfying the two-way one-hot constraint to the another state satisfying the two-way one-hot constraint, transition of four state variables is made as in following expression (2).

[Expression 2]

$$x_i : 1 \rightarrow 0, x_j : 0 \rightarrow 1, x_k : 0 \rightarrow 1, x_g : 1 \rightarrow 0 \quad \cdots (2)$$

An Ising type energy function using a weight value in this case is defined by following expression (3), for example.

[Expression 3]

$$E(x) = -\sum_{\langle i,j \rangle} W_{ij} x_i x_j - \sum_i b_i x_i \quad \cdots (3)$$

A first term on a right side is obtained by integrating products of values (0 or 1) of two bits and a weight value for all combinations of two bits selectable from all bits included in the Ising model without omission or duplication. A state variable representing a value of a bit an index (bit identification information) of which is i is represented by $x_i$, and a state variable representing a value of a bit an index of which is j is represented by $x_j$. Hereinafter, there is a case where the index represented by i is referred to as an index i or simply i. Furthermore, $W_{ij}$ represents a weight value indicating magnitude of an interaction between the bit the index of which is i and the bit the index of which is j. Note that $W_{ii}$ = 0. Furthermore, $W_{ij}$ = $W_{ji}$ in many cases.

A second term on the right side represents the total sum of products of a bias value and a bit value of each of all the bits. A bias value of the bit of the index i is represented by $b_i$.

Here, in expression (2), when the value of $x_i$ changes to $1-x_i$, an increment of $x_i$ may be expressed by $\Delta x_i$ = $(1 - x_i) - x_i$ = $1 - 2x_i$. An energy change ($\Delta E_i$) associated with this change in value is expressed by following expression (4).

[Expression 4]

$$\Delta E_i = E(x)|_{x_i \to x_i + \Delta x_i} E(x) = -\delta x_i \left( \sum_j W_{ij} x_j + b_i \right) = -h_i \cdot \Delta x_i \qquad \cdots (4)$$

Moreover, in order to make transition from the certain state satisfying the two-way one-hot constraint to the another state satisfying the two-way one-hot constraint as described above, values of four bits are changed. Assuming that i, j, k, and g are changed out of the indices as in expression (2), the energy change in that case is obtained as following expression (5) by using expression (3).
[Expression 5]

$$\Delta E_j = \left( h_i + h_g \right) - \left( h_j + h_k \right) - \left( W_{ig} + W_{jk} \right) \qquad \cdots (5)$$

When $x_i$ changes from 1 to 0, $\Delta x_i$ is -1, and when $x_i$ changes from 0 to 1, $\Delta x_i$ is 1. Note that $h_i$ is referred to as a local field value or a local field, and $\Delta E_i$ is obtained by multiplying $h_i$ by a sign (+1 or -1) depending on $\Delta x_i$.
Then, a change amount $\delta h_i^{(j)}$ of the local field $h_i$ at the time of bit inversion of $x_j$ is expressed by following expression (6).
[Expression 6]

$$\delta h_i^{(j)} = \begin{cases} +W_{ij} & for\, x_j = 0 \to 1 \\ -W_{ij} & for\, x_j = 1 \to 0 \end{cases} \qquad \cdots (6)$$

For example, a correct $h_i$ is obtained by preparing a register that stores $h_i$ and adding a change amount expressed by expression (5) at the time of bit inversion of $x_j$.
A change amount of $h_m$ when $x_j$ changes from 0 to 1 is $\delta h_m^{(j)} = +W_{mj}$, and the change amount of $h_m$ when $x_j$ changes from 1 to 0 is $\delta h_m^{(j)} = -W_{mj}$. Similarly, the change amount of $h_m$ regarding the bit the index of which is m when $x_i$ changes may be expressed by $\delta h_m^{(i)} = \Delta x_m W_{mi}$. Furthermore, the change amount of $h_m$ regarding the bit the index of which is m when $x_k$ changes may be expressed by $\delta h_m^{(k)} = \Delta x_m W_{mk}$. Furthermore, the change amount of $h_m$ regarding the bit the index of which is m when $x_g$ changes may be expressed by $\delta h_m^{(k)} = \Delta x_m W_{mk}$.
As described above, in order to make transition from the certain state satisfying the two-way one-hot constraint to the another state satisfying the two-way one-hot constraint, values of four bits are changed. For example, in a case where the state variable $x_j$ changes from 0 to 1, the state variable $x_i$ changes from 1 to 0, the state variable $x_k$ changes from 0 to 1, and the state variable $x_g$ changes from 1 to 0, a change amount of the local field of the index m is expressed by following expression (7).
[Expression 7]

$$\Delta h_m = W_{mj} + W_{mk} - \left( W_{mi} + W_{mg} \right) \qquad \cdots (7)$$

By the way, when the optimization apparatus searches for a ground state by repeating processing of changing values of four bits in one state update processing, the local field value is updated for calculating the energy change in each state update processing. For example, in a case where both the values of the bits of the index j and the index k change from 0 to 1 and both the values of the bits of the index i and the index g change from 1 to 0 in a certain group, $h_1$ to $h_n$ regarding n bits are updated on the basis of following expression (8).
[Expression 8]

$$(h_1', h_2', \cdots, h_N') = (h_1, h_2, \cdots, h_N) - \left( W_{i1}, W_{i2}, \cdots, W_{iN} \right)$$
$$- \left( W_{j1}, W_{j2}, \cdots, W_{jN} \right) - \left( W_{k1}, W_{k2}, \cdots, W_{kN} \right) - \left( W_{g1}, W_{g2}, \cdots, W_{gN} \right) \qquad \cdots (8)$$

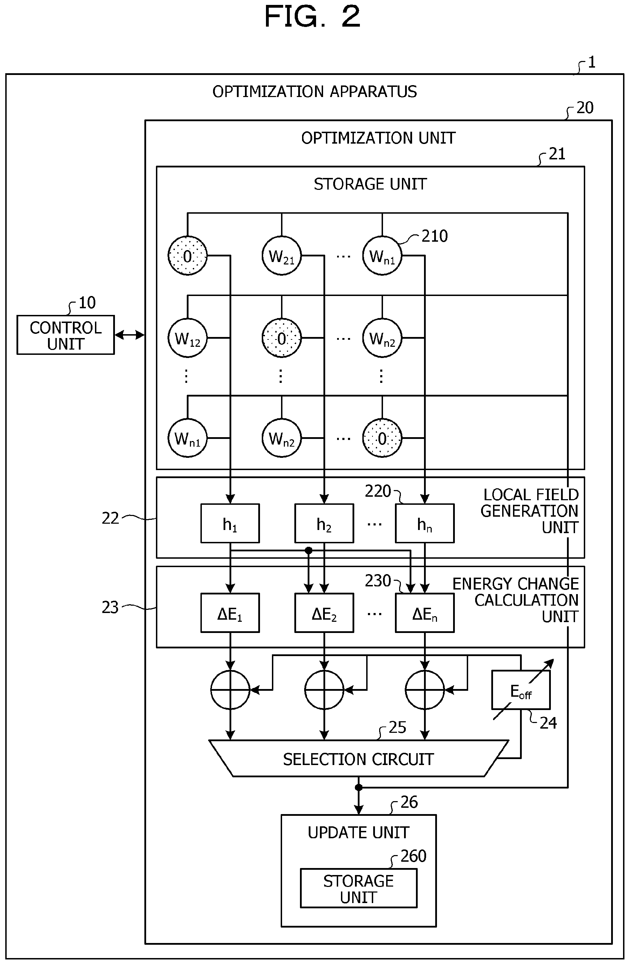

In expression (8), $h_1'$ to $h_n'$ represent local field values after the update.
Next, the optimization apparatus 1 according to this embodiment is described in detail. FIG. 2 is a configuration diagram of an optimization unit included in the optimization apparatus according to the embodiment. The optimization apparatus 1, which is an information processing apparatus, includes a control unit 10 and an optimization unit 20. The optimization unit 20 includes a storage unit 21, a local field generation unit 22, an energy change calculation unit 23, an offset addition unit 24, a selection circuit 25, and an update unit 26. The optimization unit 20 corresponds to an example of a "search unit". Here, a case of solving an optimization problem having two-way one-hot constraint using groups of conditions each including n components is described.

The storage unit 21 includes routes of a plurality of columns, and also storage elements 210 as many as the columns are further arranged in each column. For example, in FIG. 2, the storage unit 21 includes the routes of N columns. Then, the storage unit 21 includes N storage elements 210 in each column. The storage elements 210 arranged in a stage of the same number from the top of the respective columns correspond to a row including N elements. For example, the storage unit 21 holds weight values indicating magnitude of interactions between the respective N bits by the storage elements 210 arranged in an N x N matrix, respectively. In the matrix of the weight values, an initial value is stored in each of the storage elements 210 of the storage unit 21 by the control unit 10 at the time of initial setting processing. In FIG. 2, the storage element 210 of each row and each column includes a weight value represented by $W_{ij}$ in a case where a row number is i and a column number is j. The storage unit 21 is implemented by using, for example, a register, a static random access memory (SRAM) and the like.

When the state variable the value of which is to be inverted is selected by the selection circuit 25, the value of the weight corresponding to the selected state variable out of the weight values stored in the storage elements 210 of the storage unit 21, respectively, is rewritten to a value after inversion. For example, in a case where $x_j$ is selected as the state variable to be inverted, the index j is input from the selection circuit 25, and the weight value represented by $W_{mj}$ is rewritten. Furthermore, in a case of two-way one-hot, since four bits are inverted collectively, the weight values held by the storage elements 210 identified by the indices indicating other three bits corresponding to the index specified by the selection circuit 25 are also rewritten. For example, in a case of the matrix illustrated in FIG. 1, the indices indicating the other three bits corresponding to the index j are i, k, and g.

The local field generation unit 22 includes a plurality of local field generation circuits 220 arranged so as to correspond to the columns of the storage elements 210 arranged in the matrix of the storage unit 21, respectively. Each local field generation circuit 220 obtains the weight value included in each storage element 210 arranged in the corresponding column. Then, each local field generation circuit 220 generates the local field value, which is the value of the local field, by using the obtained weight value.

In the example in FIG. 1, the local field generation unit 22 includes the local field generation circuits 220 that generate $h_1$, $h_2$, ..., and $h_N$, which are the local field values regarding the N bits, respectively. Although not illustrated, each of the local field generation circuits 220 includes a hold unit implemented by, for example, a register and the like, and holds and updates the local field values $h_1$ to $h_N$ held by each of them.

For example, in a case where the state variable $x_j$ is updated, each of the local field generation circuits 220 updates the local field by adding or subtracting weight value $W_{j1}$, $W_{j2}$, ..., or $W_{jN}$ corresponding to each of them to and from the held local field. For example, the local field generation circuit 220 corresponding to a row i adds the weight value $W_{ji}$ to the local field $h_i$ in a case of the transition of the state variable $x_j$ from 0 to 1, and subtracts the weight value $W_{ji}$ from the local field $h_i$ in a case of the transition of the state variable $x_j$ from 1 to 0. Here, as described above, four bits are inverted in a case of the two-way one-hot, so that the local field generation circuit 220 updates the local field by adding or subtracting expression (7) to or from the local field held by itself.

Initial values of $h_1$ to $h_N$ are, for example, bias values bi to $b_N$, respectively, and are set by the control unit 10 at the time of initial setting processing. The local field generation circuit 220 is implemented by using, for example, an adder or a subtractor in place of the register.

The energy change calculation unit 23 calculates the energy change on the basis of the local field value generated by the local field generation unit 22. In the example in FIG. 1, the energy change calculation unit 23 includes energy change calculation circuits 230 that calculate $\Delta E_1$, $\Delta E_2$, ..., and $\Delta E_N$, which are energy changes in a case where respective N bits corresponding to the columns of the storage elements 210, of the storage unit 21 change, respectively. In FIG. 2, the route extending from the local field generation circuit 220 holding the local field $h_i$ to each energy change calculation circuit 230 is illustrated as an example, but the route extends from other local field generation circuits 220 to all the energy change calculation circuits 230.

The energy change calculation circuit 230 calculates the energy change amount using expression (5). For example, $\Delta E_j$ represents the energy change amount in a case of the transition of four state variables as in expression (2). Thereafter, each energy change calculation circuit 230 outputs the calculated energy change amount to the selection circuit 25.

The offset addition unit 24 monitors the energy change amount output from each energy change calculation circuit 230. Then, in a case where all the energy change amounts output from the energy change calculation circuits 230 are positive, the offset addition unit 24 adds an offset to each value. The offset is a negative value, and the offset addition unit 24 adjusts so that the energy change amount becomes a negative value, for example, the energy change amount in a case where the energy decrease appears.

The selection circuit 25 receives an input of the energy change amount output from each energy change calculation circuit 230. Here, in a case where all the energy change amounts are positive, the selection circuit 25 receives an input of a value obtained by adding the offset by the offset addition unit 24.

The selection circuit 25 outputs an index for identifying one that allows update of the value on the basis of a magnitude relationship between thermal excitation energy and the energy change amount output by each of a plurality of energy change calculation circuits 230. The thermal excitation energy is determined on the basis of a random number and a temperature parameter input from the control unit 10. In a case where simulated annealing is performed in the optimization apparatus 1, the temperature parameter is controlled by, for example, the control unit 10 so that the value decreases each time processing of updating the state of the Ising model is repeated a predetermined number of times. Furthermore, it is also possible to select the state change in a direction in which the energy decreases, but in this case, it stops at a local minimum value. Therefore, selection is made that stochastically allows a change in which the energy increases.

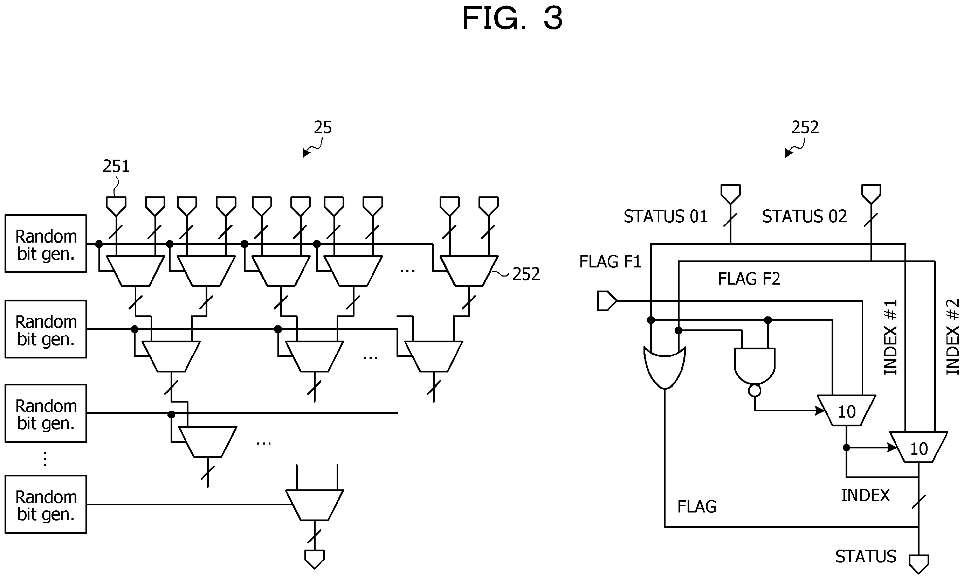

FIG. 3 is a diagram illustrating an example of a selection circuit. The selection circuit 25 in FIG. 3 is a circuit that selects a candidate of the updated bit in parallel orientation. An input terminal 251 is a terminal that receives an input of a value of an index corresponding to the energy change amount output from the energy change calculation circuit 230. Each terminal is connected to a selector 252 two by two. Moreover, an output from the selector 252 is connected to the selector 252 in a next stage two by two.

The selection circuit 25 determines whether the energy change amount input from the energy change calculation circuit 230 may accept the transition of the state variable by comparing the same with the temperature parameter input from the control unit 10. For example, the selection circuit 25 determines that the transition of the state variable is acceptable in a case where the energy change amount is smaller than a predetermined value calculated from the temperature parameter. Then, the selection circuit 25 sets an updatable flag for the index corresponding to the energy change determined to be able to accept the transition of the state variable. Then, the selection circuit 25 inputs the index corresponding to each energy change to each of the input terminals 251, and performs a tournament by the selector 252.

The selector 252 is implemented by, for example, a circuit on a right side of a paper surface in FIG. 3. The selector 252 including this circuit receives an input of two statuses 01 and 02, and obtains flags F1 and F2, and indices #1 and #2 from them, respectively. Then, the selector 252 receives an input of the random number and selects either of the indices #1 or #2 with the updatable flag set. The selector 252 adds an entry number indicating 0 or 1 of the selected one to a higher rank of the index. Then, the selector 252 outputs the selected index to the selector 252 in the next stage. The index selected by the selector 252 in a final stage indicates the bit selected by the selection circuit 25. Information of the index selected by the selection circuit 25 is output to the update unit 26 and transmitted to the storage unit 21. Therefore, the weight values held by the storage element 210 identified by the index and the storage element 210 identified by the index indicating another corresponding bit are updated.

The update unit 26 includes a storage unit 260 that holds the values ($x_1$ to $x_N$) of the N bits each of which represents the state variable. The storage unit 260 is implemented by using, for example, a register, an SRAM and the like. The update unit 26 updates the value of the bit identified by the index input from the selection circuit 25 from 0 to 1. Moreover, the update unit 26 updates the values of other three bits corresponding to the index input from the selection circuit 25. For example, in a case where the index j indicating the state variable $x_j$ illustrated in FIG. 1 is input from the selection circuit 25, the update unit 26 updates the values of the bits identified by the indices i, k, and g. In this case, the update unit 26 updates each value as expressed by expression (2).

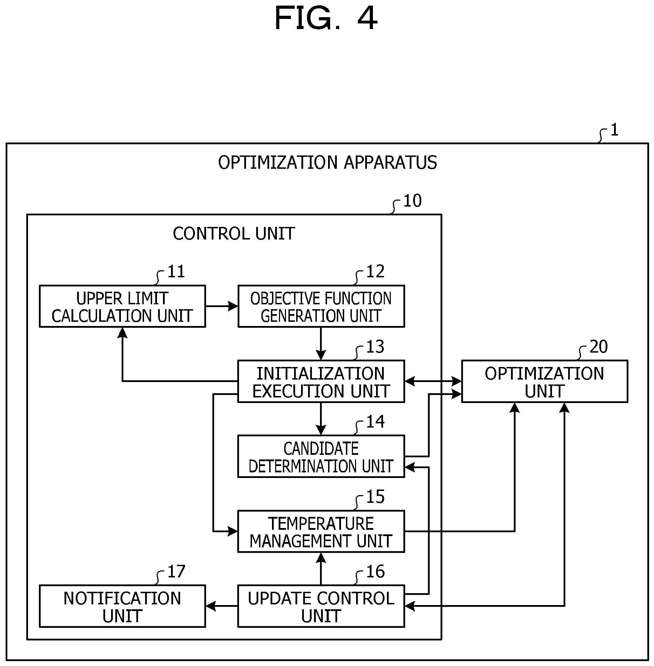

Next, the control unit 10 is described. FIG. 4 is a block diagram illustrating the control unit of the optimization apparatus in detail. As illustrated in FIG. 4, the control unit 10 includes an upper limit calculation unit 11, an objective function generation unit 12, an initialization execution unit 13, a candidate determination unit 14, a temperature management unit 15, an update control unit 16, and a notification unit 17. The control unit 10 is implemented by, for example, a field-programmable gate array (FPGA). For example, by a calculator and a storage unit included in the programmed FPGA, functions of the upper limit calculation unit 11, the objective function generation unit 12, the initialization execution unit 13, the candidate determination unit 14, the temperature management unit 15, the update control unit 16, and the notification unit 17 are implemented.

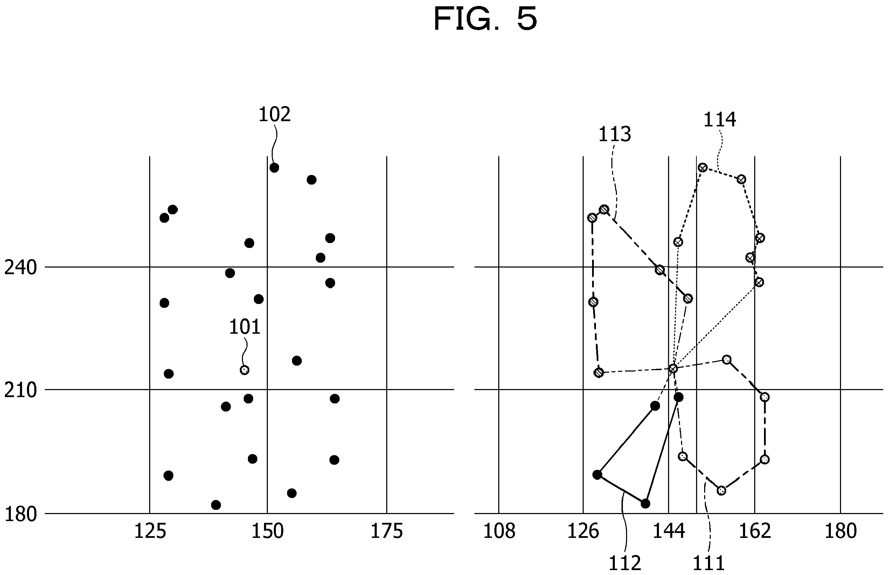

Here, a case where the optimization apparatus 1 solves a capacitated vehicle routing problem (CVRP) is described. FIG. 5 is a diagram illustrating an example of the capacitated vehicle routing problem. In the capacitated vehicle routing problem, as illustrated in FIG. 5, locations of a collection site 101 and depots 102, which are delivery destinations of packages, are determined. Furthermore, a distance between the collection site 101 and each depot 102 and a loading upper limit value of a vehicle are given. Moreover, a demand amount corresponding to an amount of packages to be delivered to each depot 102 is given. Then, a plurality of vehicles starting from the collection site 101 and returning to the collection site 101 carries supplies to each depot 102. A problem of obtaining a route that minimizes the total distance traveled by all the vehicles under the above-described condition is the capacitated vehicle routing problem. FIG. 5 illustrates the capacitated vehicle routing problem in a case where the supplies are transported by four routes using four vehicles.

The initialization execution unit 13 receives an input of conditions of the capacitated vehicle routing problem to be solved. Problem instances, which are the conditions of this capacitated vehicle routing problem, include the number of depots 102 as delivery destinations, the distance between the collection site 101 and each of the depots 102, the number of routes and the like. Each element according to the input conditions is represented by using a matrix representing a component representing a group of conditions indicating in which route it is included, and a component representing a group of conditions indicating at which time point the delivery is performed at this depot.

Thereafter, the initialization execution unit 13 receives an input of information of the matrix representing each bit of the state variable satisfying the two-way one-hot constraint and the objective function from the objective function generation unit 12. Then, the initialization execution unit 13 selects the storage element 210 used for the optimization of the storage unit 21 according to the elements of the matrix. Next, the initialization execution unit 13 obtains the weight value corresponding to each state variable from the objective function and sets the weight value corresponding to each storage element 210.

Next, the initialization execution unit 13 sets all the state variables $x_1$ to $x_n$ to 0, and then sets each of the bits representing the state variables $x_1$ to $x_n$, to 0 or 1 so as to satisfy the two-way one-hot constraint. Then, the initialization execution unit 13 outputs the value of each of the bits representing the state variables $x_1$ to $x_n$, to the optimization unit 20. Therefore, the value of each bit in the initial state is stored in the storage unit 260 included in the update unit 26, and each of $h_1$ to $h_n$, which are the local fields, is generated to be held by the local field generation unit 22 according to the state of each bit.

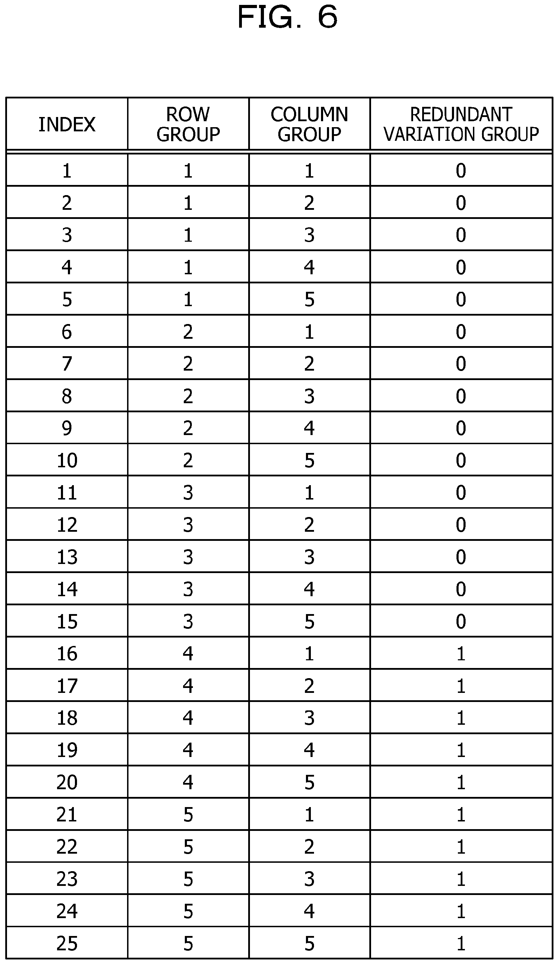

Furthermore, FIG. 6 is a diagram illustrating an example of group variables given to the elements of the matrix. The initialization execution unit 13 assigns a row group number to the elements in the same row in the matrix as the same row group, and assigns a column group number to the elements in the same column as the same column group. Then, the initialization execution unit 13 associates the index indicating each element with the row group number and the column group number. Moreover, the initialization execution unit 13 sets the elements included in the column corresponding to a redundant depot as one redundant variable group, and assigns a value indicating the redundant variable group to each element. In FIG. 6, the elements in which 1 is set in an item of the redundant variable group are the elements included in the redundant variable group.

Then, the initialization execution unit 13 outputs information of the group variable associated with the index indicating each element to the candidate determination unit 14. Moreover, the initialization execution unit 13 notifies the temperature management unit 15 of setting of initial temperature.

The upper limit calculation unit 11 arranges the demand amounts of the depots 102 in ascending order. Next, the upper limit calculation unit 11 calculates a cumulative demand amount including the number of depots from the top to (M-1)-th of the arranged demand amounts when calculating the maximum number of depots of an M-th route. Next, the upper limit calculation unit 11 specifies the minimum number of depots that does not exceed "M x loading upper limit value of vehicle". Then, the upper limit calculation unit 11 sets a quotient obtained by dividing the specified number of depots by M as the maximum number of depots of an N-th route. This is because the demand amounts become a target decreasing sequence by arranging the demand amounts in the ascending order, so that the fact that the M-th route becomes larger than the number obtained by dividing the minimum number of depots not larger than "M x loading upper limit value of vehicle" by M is a contradiction. The upper limit calculation unit 11 changes M from 1 to the upper limit of the number of vehicles to obtain the maximum number of depots of each route from the first to the upper limit of the number of vehicles. Thereafter, the upper limit calculation unit 11 outputs information on the maximum number of depots of each route to the objective function generation unit 12.

The objective function generation unit 12 receives an input of the information on the maximum number of depots of each route from the upper limit calculation unit 11. Next, the objective function generation unit 12 calculates a difference between the total sum of the maximum number of depots of each route and the number of depots 102. Then, the objective function generation unit 12 sets a value of the calculated difference as the number of redundant depots (dummy depots). Next, the objective function generation unit 12 creates a matrix represented by a row in which up to the maximum number of depots for each route are arranged in order and a row in which the depots including the redundant depots are arranged. For example, assuming that a direction in which the row extends is time lapse, this matrix represents the depot out of expanded depots obtained by adding the redundant depots to actual depots 102 where the vehicle visits, and a time point at which the vehicle visits the depot. Each row is a group of conditions indicating in which route the depot is included, and each column is a group of conditions indicating at which time point the delivery is performed to the depot. Here, the time point is a delivery timing, information indicating in which order the delivery is performed in each route. Hereinafter, the delivery timing in each route is referred to as the "time point". If the time point is early, the delivery order is early, and if the time point is late, the delivery order is late. The redundant depot corresponds to an example of a "redundant variable", variables to select the route including the expanded depot and the time point corresponds to an example of "expanded variables", and the time point of the expanded depot and each route corresponds to an example of "the same number of components as the expanded variables". Then, the group of conditions indicating in which route the depot is included, and the group of conditions indicating at which time point the delivery is performed to the depot correspond to an example of "two groups including the expanded variables and the same number of components".

Then, the objective function generation unit 12 assigns numbers to the depots 102 as i = 0, 1, 2, ..., sets $x_{it}$ to 1 if there is the vehicle at the depot 102 of the index i at time t, sets $x_{it}$ to 0 if there is no vehicle, and sets the bit that represents the state variable.

In this matrix, rows from a first row to a row of the maximum number of depots in a first route represent the position of the vehicle traveling in the first route, and rows from a next row to a row of the maximum number of depots in a second route represent the position of the vehicle traveling in the second route. In this manner, a number of route is incremented in order, and rows from a last row to a row corresponding to the maximum number of depots in an N-th route of the matrix represent the position of the vehicle traveling in the N-th route. This matrix has the same number of rows and columns, and satisfies the two-way one-hot constraint that "the number of 1 in each row and each column is one".

Then, the objective function generation unit 12 defines the objective function by following expression (9).
[Expression 9]

$$E(x, y) = C(x) + P_1(x) + P_2(x, y) \quad \cdots (9)$$

E(x,y) represents energy. Then, C(x) represents the total sum of costs. Furthermore, Pi(x) represents the constraint of the redundant depot. Furthermore, $P_2(x,y)$ represents inequality constraint of a slack variable y.

The objective function generation unit 12 outputs information of the generated matrix and energy function to the initialization execution unit 13.

The temperature management unit 15 receives an instruction of initial temperature setting from the initialization execution unit 13. Then, the temperature management unit 15 sets the initial temperature, which is high temperature, as a temperature parameter. Then, the temperature management unit 15 notifies the optimization unit 20 of the temperature parameter. Thereafter, when the temperature management unit 15 receives an instruction to lower the temperature from the update control unit 16, this decreases a value of the temperature parameter according to a temperature schedule specified in advance. The temperature management unit 15 notifies the optimization unit 20 of a changed temperature parameter each time the temperature parameter is changed.

The candidate determination unit 14 determines the index indicating the state variable to be inverted as a candidate of the transition out of the state variables indicating the route in which the expanded depot is included and the time point, and notifies the optimization unit 20 of the same. A method for selecting the state variable to be inverted, which is the candidate of the transition, is described below.

The candidate determination unit 14 receives an input of the information of the group variable representing each index from the initialization execution unit 13. Next, the candidate determination unit 14 selects the index indicating the state variable the value of which is to be inverted. For example, the candidate determination unit 14 selects the index j indicating the state variable $x_j$ in the matrix illustrated in FIG. 1. Then, the candidate determination unit 14 specifies the indices indicating other three bits determined from the two-way one-hot constraint according to the selected index. For example, in a case where the candidate determination unit 14 first selects the index j indicating the state variable $x_j$ in the matrix illustrated in FIG. 1, this selects i, k, and g as the other three indices.

Next, the candidate determination unit 14 reads values of the redundant variable group of the two indices indicating the redundant variables located at diagonal corners different from the redundant variable indicated by the index selected first in the matrix in which the state variables are arranged out of the four selected indices. Then, the candidate determination unit 14 determines whether either of the read values of the redundant variable group of the two indices is 0. For example, in a case where the candidate determination unit 14 selects i, j, k, and g as the four indices, this reads the values of the redundant variable group corresponding to the indices i and g of the redundant variables $x_i$ and $x_g$ at the diagonal corners different from the state variable $x_j$ indicated by the index j selected first. Then, the candidate determination unit 14 determines whether either of the value of the redundant variable group of the index i or the value of the redundant variable group of the index g is 0. In a case where either of them is 0, the candidate determination unit 14 determines the state variable corresponding to the selected index as the candidate the value of which is to be inverted. Then, the candidate determination unit 14 notifies the optimization unit 20 of the index determined as the candidate the value of the state variable of which is to be inverted.

In contrast, in a case where all of the values of the redundant variable group of the read indices is 1, the candidate determination unit 14 determines not to adopt the state variable corresponding to the selected index as the candidate the value of which is to be inverted. In this case, the candidate determination unit 14 does not notify the optimization unit 20 of the selected index.

Here, a case where all the values of the redundant variable group are 1 is described. The fact that the value of the redundant variable group is 1 indicates that the state variable indicated by the index is the variable for the redundant depot. When the state variable for the redundant depot is 1, this means that the vehicle goes to this depot, but the redundant depot is the depot that does not exist, so that the vehicle does not actually go to the redundant depot. Then, the fact that both the values of the redundant variable group of two indices are 1 means that both the depots indicated by the two indices are the redundant depots. In this case, even if the delivery to the depot corresponding to one index is exchanged to the delivery to the depot corresponding to the other index, the exchange is meaningless because the vehicle does not go either eventually. Therefore, inverting the value of this state variable does not change the energy, resulting in a wasteful calculation. Therefore, in this case, the candidate determination unit 14 may reduce a calculation amount of the optimization unit 20 by not notifying the optimization unit 20 of the index. This processing corresponds to an example of processing of "excluding one of sets of candidates in which values of redundant variables are exchanged with each other".

By selecting the index j to be inverted one by one from 1 to N, the candidate determination unit 14 determines whether the state variable indicated by each index is made the candidate of bit inversion for all indices, and notifies the optimization unit 20 of this. The selection of the indices according to the two-way one-hot constraint by the candidate determination unit 14 described above corresponds to an example of processing of "determining sets of candidates having values which are to be changed on the basis of the predetermined constraint". Furthermore, the determination of the candidates by changing the value of the state variable by the candidate determination unit 14 corresponds to an example of "determining the sets of the candidates having the values which are to be changed by changing assignment of the expanded variables performed according to a condition other than the two-way one-hot constraint included in the predetermined constraint without duplication allowed".

Thereafter, when receiving an instruction to select the next state variable x from the update control unit 16, the candidate determination unit 14 selects again the indices from 1 to N in order, and notifies the optimization unit 20 of whether the respective state variables are made the candidates of the bit inversion.

The update control unit 16 receives a notification from the optimization unit 20 that the update of the state variable is completed. Then, the update control unit 16 determines whether the state variable is selected a specified number of times with the same temperature setting. In a case where the state variable is not selected the specified number of times with the same temperature setting, the update control unit 16 instructs the candidate determination unit 14 to select the next state variable x.

In contrast, in a case where the selection of the state variable of the specified number of times with the same temperature setting is completed, the update control unit 16 determines whether the temperature is lowered a predetermined number of times. In a case where the number of times the temperature is lowered does not reach the predetermined number of times, the update control unit 16 instructs the temperature management unit 15 to lower the temperature and instructs the candidate determination unit 14 to select the next state variable x.

In contrast, in a case where the number of times the temperature is lowered reaches the predetermined number of times, the update control unit 16 determines finishing optimization processing. Then, the update control unit 16 obtains the values of $N = n^2$ bits representing the respective state variables ($x_1$ to $x_N$) stored in the storage unit 260 included in the update unit 26 of the optimization unit 20. Then, the update control unit 16 deletes the bit value of the state variable representing the redundant depot from the values of $N = n^2$ bits representing the respective obtained state variables ($x_1$ to $x_N$). For example, the update control unit 16 obtains a solution by excluding the assignment of the redundant variables out of the assignments of the expanded variables to the components obtained as the search result by the optimization unit 20 in a case where it reaches a specific condition. Then, the update control unit 16 outputs information indicating an optimized route to travel the actual depots 102 to the notification unit 17.

The notification unit 17 receives an input of information indicating the optimized route to travel the actual depots 102 from the update control unit 16. Then, the notification unit 17 obtains an optimum route from the obtained information indicating the optimized route to travel the actual depots 102, and notify a user of the obtained optimum route by transmitting the same to a terminal apparatus (not illustrated) and the like used by the user.

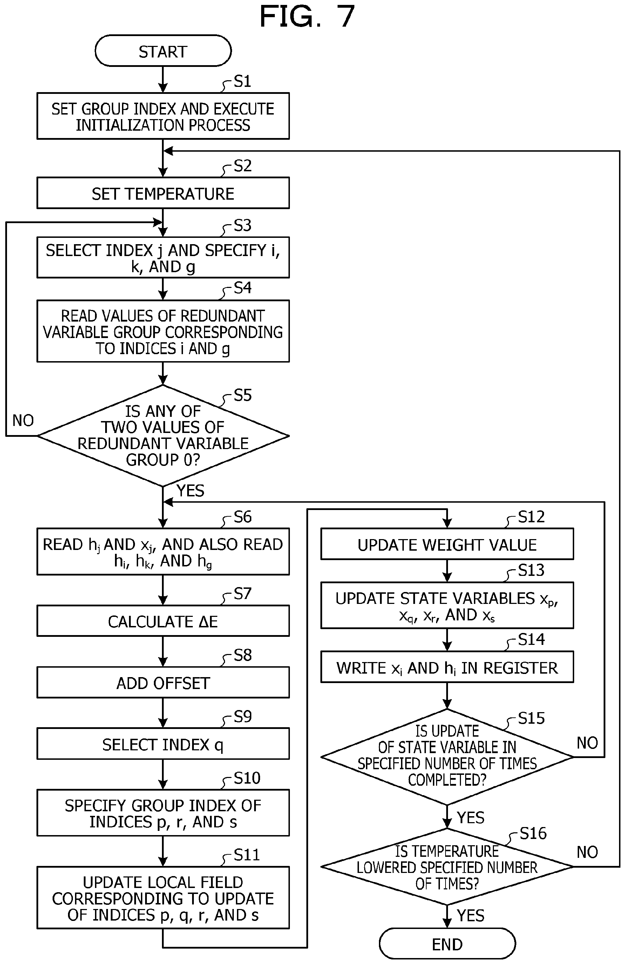

FIG. 7 is a flowchart of the optimization processing by the optimization apparatus according to the embodiment. Next, a flow of the optimization processing by the optimization apparatus 1 according to the embodiment is described with reference to FIG. 7. This optimization processing is implemented by execution of an information processing program by the optimization apparatus 1.

The initialization execution unit 13 receives an input of conditions of the capacitated vehicle routing problem. Then, the initialization execution unit 13 outputs the obtained conditions of the capacitated vehicle routing problem to the upper limit calculation unit 11. The upper limit calculation unit 11 arranges the depots 102 as the delivery destinations in ascending order of demand amount. Next, the upper limit calculation unit 11 sequentially selects the depots 102 arranged in ascending order of demand amount from the top, and calculates the maximum number of depots in each route by using the cumulative demand amount up to the selected depots 102 and the loading upper limit value of the vehicle. The objective function generation unit 12 sets the redundant depot using the maximum number of depots, and generates a matrix representing the route in which the expanded depots including the redundant depots and the actual depots 102 are included and the delivery order. Then, the objective function generation unit 12 gives bits representing the respective elements of the generated matrix, and generates the objective function using these bits. The initialization execution unit 13 obtains the matrix and the objective function generated by the objective function generation unit 12. Next, the initialization execution unit 13 executes group index setting and initialization process described below (step S1).

For example, the initialization execution unit 13 gives each element of each row of the obtained matrix the row group number indicating each row, and gives each element of each column the column group number indicating each column. Then, the initialization execution unit 13 associates the index indicating each element with the row group number and the column group number. Moreover, the initialization execution unit 13 sets information indicating whether each index belongs to the redundant variable group depending on whether each index indicates delivery to the redundant depot.

Furthermore, the initialization execution unit 13 secures the storage element 210 included in the storage unit 21 of the optimization unit 20 according to each element of the matrix, and stores the weight value for each bit obtained from the objective function therein. Moreover, the initialization execution unit 13 sets the initial value of each bit so as to satisfy two-way one-hot, and notifies the optimization unit 20 of the same. Therefore, in the optimization unit 20, the local field generation unit 22 calculates to hold $h_1$ to $h_N$, which are the local fields, and stores the initial value of each bit in the storage unit 260 included in the update unit 26.

The temperature management unit 15 receives an instruction of temperature setting from the initialization execution unit 13. Then, in a case where the temperature management unit 15 does not set temperature yet, this notifies the optimization unit 20 of the initial temperature, which is high temperature, and sets the initial temperature. Furthermore, in a case where the temperature is already set, the temperature management unit 15 lowers the temperature from the set temperature already set at that time according to a temperature schedule specified in advance. Then, the temperature management unit 15 notifies the optimization unit 20 of new lowered set temperature, and sets the temperature (step S2).

The candidate determination unit 14 obtains information of the group variable associated with the index indicating each state variable from the initialization execution unit 13. Next, the candidate determination unit 14 selects the index j corresponding to $x_j$ out of the elements of the matrix illustrated in FIG. 1 as the index indicating the state variable to be inverted. Next, the candidate determination unit 14 selects the indices i, k, and g corresponding to the state variables $x_i$, $x_k$, and $x_g$ of the matrix illustrated in FIG. 1 as the indices indicating other three bits determined from the two-way one-hot constraint according to the selected index j (step S3).

Next, the candidate determination unit 14 reads the values of the redundant variable group of i and g, which are the indices at diagonal corners the indicated state variables of which are different from that of the index j selected first (step S4).

Then, the candidate determination unit 14 determines whether either of the read two values of the redundant variable group is 0 (step S5).

In a case where all of the read values of the redundant variable group is 1 (step S5; No), the candidate determination unit 14 determines not to adopt the state variable corresponding to the selected index as the candidate the value of which is to be inverted. Thereafter, the candidate determination unit 14 returns to step S3.

In contrast, in a case where either of them is 0 (step S5: Yes), the candidate determination unit 14 determines the state variable corresponding to the selected index as the candidate the value of which is to be inverted. Then, the candidate determination unit 14 notifies the optimization unit 20 of the index indicating the state variable determined as the candidate the value of which is to be inverted. The candidate determination unit 14 determines whether the state variable $x_j$ indicated by each index j is made the candidate of the bit inversion by sequentially selecting j while changing from 1 to N, and notifies the optimization unit 20 of the index j in a case of determining to make this the candidate the value of which is to be inverted. The optimization unit 20 reads the value of $x_j$ held in the storage unit 260 included in the update unit 26. Then, the optimization unit 20 notifies the energy change calculation unit 23 of whether the transition of the value of $x_j$ is from 0 to 1 or 1 to 0. Moreover, the energy change calculation unit 23 specifies $h_j$, which is the local field corresponding to j, and i, k, and g corresponding to j, and reads $h_i$, $h_k$, and $h_g$, which are the local fields corresponding to i, k, and g (step S6).

Next, the energy change calculation unit 23 calculates $\Delta E(\Delta E_1, \Delta E_2, ..., \Delta E_N)$, which is the energy change amount for each j (step S7). Thereafter, the energy change calculation unit 23 outputs information of the calculated energy change amount.

In a case where all the energy change amounts output from the energy change calculation unit 23 are positive, the offset addition unit 24 adds an offset to each energy change amount (step S8).

The selection circuit 25 obtains the information of each energy change amount output from the energy change calculation unit 23. Then, the selection circuit 25 sets an updatable flag for the index indicating the state variable that may accept the inversion of the value by comparing with the set temperature obtained from the temperature management unit 15 of the control unit 10. Thereafter, the selection circuit 25 selects one index q from the indices to which the updatable flag is added (step S9).

The optimization unit 20 obtains the information of the group variable assigned to each index from the control unit 10. Then, the optimization unit 20 specifies the indices p, r, and s indicating state variables $x_p$, $x_r$, and $x_s$ the values of which are inverted, satisfying the two-way one-hot constraint corresponding to the inversion of the value of the state variable $x_q$ indicated by the index q selected by the selection circuit 25. Then, the optimization unit 20 specifies the group variables representing the indices p, r, and s (step S10).

Information of p, q, r, and s, which are the indices indicating the state variables the values of which are to be updated, is input to the storage unit 21, and the weight values corresponding to the indices are output to the local field generation circuits 220 of the local field generation unit 22, respectively. Each local field generation circuit 220 receives an input of the weight values corresponding to update of p, q, r, or s, and updates the held local field (step S11).

Moreover, the storage unit 21 updates the weight values stored in the storage elements 210 corresponding to the indices p, q, r, and s, respectively (step S12).

The update unit 26 to which information of p, q, r, and s, which are the indices indicating the state variables the values of which are to be updated, is input specifies $x_p$, $x_q$, $x_r$, and $x_s$, which are the state variables indicated by the indices obtained from the state variables held by the storage unit 260. Then, the update unit 26 inverts and updates the values of the specified state variables $x_p$, $x_q$, $x_r$, and $x_s$ (step S13).

Thereafter, the update unit 26 writes all the updated state variables to the storage unit 260. Furthermore, each local field generation circuit 220 writes the updated local field in the register held by the same (step S14).

When the update of the state variables and the local fields in the optimization unit 20 is completed, the update control unit 16 determines whether the update of the state variables in a specified number of times is completed (step S15). In a case where the state variables are not updated the specified number of times (step S15: No), the optimization processing returns to step S6.

In contrast, in a case where the update of the state variables in the specified number of times is completed (step S15: Yes), the update control unit 16 determines whether the temperature is lowered a specified number of times (step S16).

In a case where the temperature is not lowered the specified number of times (step S16: No), the optimization processing returns to step S2. In contrast, in a case where the temperature is lowered the specified number of times (step S16: Yes), the optimization apparatus 1 finishes the optimization processing.

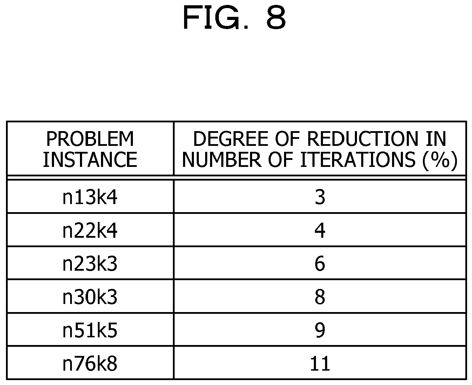

FIG. 8 is a diagram illustrating a degree of reduction in the number of iterations in a case of solving the capacitated vehicle routing problem. Here, the problem instance of the capacitated vehicle routing problem in a case where the number of depots including the collection site 101 and the depots 102 is #P, and number of routes is #R is represented by n#Pk#R.

The degree of reduction in the number of iterations in FIG. 8 indicates the degree of reduction in the number of iterations in a case of using the optimization apparatus 1 according to this embodiment, as compared with the number of iterations in a case where the optimization processing is performed without excluding replacement of the redundant depots. For example, in a case where the problem instance is n13k4, the number of iterations was reduced by 3% as compared with a case where the optimization processing is performed without excluding the replacement of redundant depots. Similarly, in a case where the problem instances are n22k4, n23k3, n30k3, n51k5, and n76k8, the degrees of reduction were 4%, 6%, 8%, 9%, and 11%, respectively. In this manner, the optimization apparatus 1 according to this embodiment may reduce the number of iterations until reaching an optimum value by eliminating the exchange between the redundant depots according to the two-way one-hot constraint.

As described above, the optimization apparatus 1 according to this embodiment excludes the change of the selection by the exchange between the redundant depots introduced for calculation in a case of changing the selection according to the two-way one-hot constraint in a case of solving the optimization problem having the two-way one-hot constraint. This makes it possible to reduce the number of iterations until reaching the optimal value, and shorten the calculation time of the optimization problem having the two-way one-hot constraint.

**Claims**

1.  An information processing apparatus of obtaining a solution to a problem in which predetermined constraint that includes two-way one-hot constraint is given, by using an objective function that has a predetermined number of variables, the information processing apparatus comprising:

    a candidate determination unit that excludes, when determining sets of candidates that have values which are to be changed on the basis of the predetermined constraint from expanded variables obtained by adding a plurality of redundant variables to the predetermined number of variables, one of the sets of the candidates in which values of the redundant variables are exchanged with each other;
    a search unit that changes the values of the sets of the candidates determined by the candidate determination unit, according to the predetermined constraint, and performs a search on the basis of the objective function; and
    an update control unit that determines the solution on the basis of a result of the search by the search unit.

2. The information processing apparatus according to claim 1, wherein

the candidate determination unit determines the sets of the candidates that have the values which are to be changed, by changing assignments of the expanded variables, to respective components of two groups each of which includes the expanded variables and the same number of the components, performed according to a condition other than the two-way one-hot constraint included in the predetermined constraint without duplication allowed, and the candidate determination unit excludes one of the assignments, to the components, of the expanded variables in which the redundant variables of the expanded variables are exchanged with each other, and
the search unit performs the search on the basis of the assignments to the components of the expanded variables determined by the candidate determination unit.

3. The information processing apparatus according to claim 2, wherein the update control unit causes the candidate determination unit to repeatedly determine the sets of the candidates that have the values which are to be changed and causes the search unit to repeatedly perform the search, and excludes the assignment of the redundant variables out of the assignments of the expanded variables to the components obtained as a search result made by the search unit in a case where a specific condition is satisfied.

4. The information processing apparatus according to any one of claims 1 to 3, wherein the search unit calculates an energy change, by using the objective function for each of the sets of the candidates determined by the candidate determination unit, to perform the search.

5. The information processing apparatus according to any one of claims 1 to 4, further comprising

an upper limit calculation unit that calculates an upper limit number of elements capable of being included in each of a plurality of divided groups generated by dividing one of constraint groups on the basis of constraint other than the two-way one-hot constraint included in the predetermined constraint for two constraint groups, each of which includes the predetermined number of elements and satisfies the two-way one-hot constraint when the variables are assigned to the elements without duplication allowed, wherein
the candidate determination unit determines the number of redundant variables according to the upper limit number obtained by the upper limit calculation unit.

6. An information processing method implemented by a computer of obtaining a solution to a problem in which predetermined constraint that includes two-way one-hot constraint is given, by using an objective function that has a predetermined number of variables, the information processing method comprising:

excluding, when determining sets of candidates that have values which are to be changed on the basis of the predetermined constraint from expanded variables obtained by adding a plurality of redundant variables to the predetermined number of variables, one of the sets of the candidates in which values of the redundant variables are exchanged with each other;
changing, according to the predetermined constraint, the values of the sets of the candidates to perform a search on the basis of the objective function; and
determining the solution on the basis of a result of the search.

7. An information processing program comprising instructions which, when executed by a computer, cause the computer to perform processing, the computer including a processor that obtains a solution to a problem in which predetermined constraint that includes two-way one-hot constraint is given, by using an objective function that has a predetermined number of variables, the processing comprising:

excluding, when determining sets of candidates that have values which are to be changed on the basis of the predetermined constraint from expanded variables obtained by adding a plurality of redundant variables to the predetermined number of variables, one of the sets of the candidates in which values of the redundant variables are exchanged with each other;
changing, according to the predetermined constraint, the values of the sets of the candidates to perform a search on the basis of the objective function; and
determining the solution on the basis of a result of the search.

# FIG. 1

# FIG. 2

# FIG. 3

# FIG. 4

OPTIMIZATION APPARATUS 〔1

CONTROL UNIT 〔10

UPPER LIMIT CALCULATION UNIT 〔11

OBJECTIVE FUNCTION GENERATION UNIT 〔12

INITIALIZATION EXECUTION UNIT 〔13

OPTIMIZATION UNIT 〔20

CANDIDATE DETERMINATION UNIT 〔14

TEMPERATURE MANAGEMENT UNIT 〔15

NOTIFICATION UNIT 〔17

UPDATE CONTROL UNIT 〔16

FIG. 5

# FIG. 6

| INDEX | ROW GROUP | COLUMN GROUP | REDUNDANT VARIATION GROUP |
|---|---|---|---|
| 1 | 1 | 1 | 0 |
| 2 | 1 | 2 | 0 |
| 3 | 1 | 3 | 0 |
| 4 | 1 | 4 | 0 |
| 5 | 1 | 5 | 0 |
| 6 | 2 | 1 | 0 |
| 7 | 2 | 2 | 0 |
| 8 | 2 | 3 | 0 |
| 9 | 2 | 4 | 0 |
| 10 | 2 | 5 | 0 |
| 11 | 3 | 1 | 0 |
| 12 | 3 | 2 | 0 |
| 13 | 3 | 3 | 0 |
| 14 | 3 | 4 | 0 |
| 15 | 3 | 5 | 0 |
| 16 | 4 | 1 | 1 |
| 17 | 4 | 2 | 1 |
| 18 | 4 | 3 | 1 |
| 19 | 4 | 4 | 1 |
| 20 | 4 | 5 | 1 |
| 21 | 5 | 1 | 1 |
| 22 | 5 | 2 | 1 |
| 23 | 5 | 3 | 1 |
| 24 | 5 | 4 | 1 |
| 25 | 5 | 5 | 1 |

# FIG. 7

```
         ( START )
             │
             ▼         ┌S1
┌────────────────────────────┐
│ SET GROUP INDEX AND EXECUTE │
│    INITIALIZATION PROCESS    │
└────────────────────────────┘
             │
             ▼         ┌S2
┌────────────────────────────┐
│       SET TEMPERATURE        │
└────────────────────────────┘
             │
             ▼         ┌S3
┌────────────────────────────┐
│  SELECT INDEX j AND SPECIFY i,│
│          k, AND g            │
└────────────────────────────┘
             │
             ▼         ┌S4
┌────────────────────────────┐
│   READ VALUES OF REDUNDANT   │
│ VARIABLE GROUP CORRESPONDING │
│      TO INDICES i AND g      │
└────────────────────────────┘
             │
             ▼         ┌S5
        ◇ IS ANY OF ◇
      TWO VALUES OF
NO   REDUNDANT VARIABLE
        GROUP 0?
             │ YES
```

S6 — READ $h_j$ AND $x_j$, AND ALSO READ $h_i$, $h_k$, AND $h_g$

S7 — CALCULATE $\Delta E$

S8 — ADD OFFSET

S9 — SELECT INDEX q

S10 — SPECIFY GROUP INDEX OF INDICES p, r, AND s

S11 — UPDATE LOCAL FIELD CORRESPONDING TO UPDATE OF INDICES p, q, r, AND s

S12 — UPDATE WEIGHT VALUE

S13 — UPDATE STATE VARIABLES $x_p$, $x_q$, $x_r$, AND $x_s$

S14 — WRITE $x_i$ AND $h_i$ IN REGISTER

S15 — IS UPDATE OF STATE VARIABLE IN SPECIFIED NUMBER OF TIMES COMPLETED? — NO / YES

S16 — IS TEMPERATURE LOWERED SPECIFIED NUMBER OF TIMES? — NO / YES

( END )

# FIG. 8

| PROBLEM INSTANCE | DEGREE OF REDUCTION IN NUMBER OF ITERATIONS (%) |
|:---:|:---:|
| n13k4 | 3 |
| n22k4 | 4 |
| n23k3 | 6 |
| n30k3 | 8 |
| n51k5 | 9 |
| n76k8 | 11 |

Europäisches
Patentamt

European
Patent Office

Office européen
des brevets

# EUROPEAN SEARCH REPORT

Application Number

EP 22 20 5212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 889 843 A1 (FUJITSU LTD [JP]) 6 October 2021 (2021-10-06) * paragraph [0001] - paragraph [0009] * * paragraph [0147] - paragraph [0164]; figure 16 * | 1-7 | INV. G06N5/01 |
| A | MATSUBARA SATOSHI ET AL: "Digital Annealer for High-Speed Solving of Combinatorial optimization Problems and Its Applications", 2020 25TH ASIA AND SOUTH PACIFIC DESIGN AUTOMATION CONFERENCE (ASP-DAC), IEEE, 13 January 2020 (2020-01-13), pages 667-672, XP033746210, DOI: 10.1109/ASP-DAC47756.2020.9045100 [retrieved on 2020-03-23] * the whole document * | 1-7 | |
| A | SANROKU TSUKAMOTO ET AL: "An Accelerator Architecture for Combinatorial Optimization Problems", FUJITSU SCIENTIFIC & TECHNICAL JOURNAL (FSTJ), vol. 53, no. 5, 1 September 2017 (2017-09-01), pages 18-13, XP055673462, * the whole document * | 1-7 | TECHNICAL FIELDS SEARCHED (IPC) G06N |
| A | Liu Xiaoyuan ET AL: "On Modeling Local Search with Special-Purpose Combinatorial Optimization Hardware", Library Cornell University Ithaca, 27 January 2020 (2020-01-27), pages 1-24, XP055821555, Retrieved from the Internet: URL:https://arxiv.org/pdf/1911.09810v2.pdf [retrieved on 2021-07-06] * the whole document * | 1-7 | |

The present search report has been drawn up for all claims

| Place of search | Date of completion of the search | Examiner |
|---|---|---|
| The Hague | 12 June 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5212

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2023

| Patent document cited in search report | | Publication date | Patent family member(s) | | Publication date |
|---|---|---|---|---|---|
| EP 3889843 | A1 | 06-10-2021 | CN 113449901 A | | 28-09-2021 |
| | | | EP 3889843 A1 | | 06-10-2021 |
| | | | JP 2021157361 A | | 07-10-2021 |
| | | | US 2021303755 A1 | | 30-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8153085 A

- JP 2015038429 A